# EUROPÄISCHE PATENTANMELDUNG

(11) **EP 2 784 036 A1**
(43) Veröffentlichungstag der Anmeldung: **01.10.2014**
(21) Anmeldenummer: 13161133.7
(22) Anmeldetag: 26.03.2013
(51) Int. Cl.: C04B 20/10, C04B 28/02, C04B 28/04, C04B 28/06, C04B 28/08, C04B 28/14, C09C 1/36, C09C 3/10, C09C 1/02

(54) **SCHNELL SUSPENDIERBARE PULVERFÖRMIGE ZUSAMMENSETZUNG**

(71) Anmelder: BASF SE, 67056 Ludwigshafen (DE)
(72) Erfinder: Bichler, Manfred, 84549 Engelsberg (DE); Schinabeck, Michael, 83352 Altenmarkt (DE); Gädt, Torben, 83278 Traunstein (DE); Mazanec, Oliver, 83022 Rosenheim (DE)
(74) Vertreter: Gastner, Thomas

(57) **Zusammenfassung**

Die Erfindung betrifft eine pulverförmige Zusammensetzung, herstellbar durch in Kontakt bringen eines Pulvers mit 0,01 bis 50 Gew.-%, bezogen auf die Gesamtmasse der Zusammensetzung, einer flüssigen Komponente, umfassend mindestens ein Copolymer, welches erhältlich ist durch Polymerisation einer Mischung von Monomeren, umfassend (I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und (II) mindestens ein ethylenisch ungesättigtes Monomer mit einem Polyalkylenoxid-Rest, wobei die flüssige Komponente mindestens 1 Gew.-% des mindestens einen Copolymers und mindestens 30 Gew.-% eines organischen Lösungsmittels enthält und wobei das Pulver, welches mit der flüssigen Komponente in Kontakt gebracht wird, kein anorganisches Bindemittel umfasst. Weiterhin wird eine Bindemittelzusammensetzung offenbart, welche eine erfindungsgemäße pulverförmige Zusammensetzung und ein anorganisches Bindemittel umfasst.

## Beschreibung

Die Erfindung betrifft eine schnell suspendierbare pulverförmige Zusammensetzung, welche durch in Kontakt bringen eines Pulvers mit einer flüssigen Komponente, enthaltend mindestens ein Copolymer und ein organisches Lösungsmittel herstellbar ist, wobei das Pulver, welches mit der flüssigen Komponente in Kontakt gebracht wird, kein anorganisches Bindemittel umfasst. Weiterhin wird eine Bindemittelzusammensetzung umfassend die erfindungsgemäße pulverförmige Zusammensetzung offenbart.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt.

Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Neben den beschriebenen Polycarboxylatethern sind inzwischen auch eine Reihe von Derivaten mit modifiziertem Wirkungsprofil bekannt. So beschreibt beispielsweise die US 2009312460 Polycarboxylatester, wobei die Esterfunktion nach Einbringen in eine zementäre, wässrige Mischung hydrolysiert wird und hierdurch ein Polycarboxylatether gebildet wird. Polycarboxylatester haben den Vorteil, dass sie ihre Wirkung erst nach einiger Zeit in der zementären Mischung entfalten und hierdurch die dispergierende Wirkung über einen längeren Zeitraum aufrechterhalten werden kann.

Weiterhin sind aus der DE 199 05 488 pulverförmige Polymerzusammensetzungen auf Basis von Polyethercarboxylaten bekannt, wobei diese 5 bis 95 Gew.-% des wasserlöslichen Polymers und 5 bis 95 Gew.-% eines feinteiligen mineralischen Trägermaterials umfassen. Die Produkte werden durch in Kontakt bringen des mineralischen Trägermaterials mit einer Schmelze oder einer wässrigen Lösung des Polymers hergestellt. Als Vorteile dieses Produktes wird im Vergleich zu sprühgetrockneten Produkten eine deutlich erhöhte Verklebungs- und Verbackungsresistenz genannt.

Aus der WO 2006/027363 ist ein Verfahren zur Herstellung eines beschichteten Grundstoffs für eine hydraulische Zusammensetzung bekannt. In den Beispielen wird unter anderem die Beschichtung eines Portlandzements mit 1 % einer wässrigen Polycarboxylatether-Lösung, bezogen auf das Bindemittelgewicht, offenbart.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel bei dessen Herstellung zugemischt werden. Beim Anmachen des Werktrockenmörtels mit Wasser lösen sich die Polycarboxylatether und können nachfolgend ihre Wirkung entfalten.

Alternativ ist es auch möglich, Polycarboxylatether oder deren Derivate der anorganischen Feststoffsuspension in gelöster Form zuzusetzen. Insbesondere kann das Dispergiermittel direkt in das Anmachwasser dosiert werden.

Alle bisher bekannten Verfahren Fließmittel in eine anorganische Feststoffsuspension einzubringen haben jedoch den Nachteil, dass die dispergierende Wirkung sich nicht unmittelbar nach Zugabe des Anmachwassers entfaltet. Unabhängig davon ob das Dispergiermittel als Pulver oder in wässriger Lösung zugesetzt wird, kann es beispielsweise bei einem Trockenmörtel -je nach Wasser zu Zement Verhältnis (w/z Wert) bzw. Wasseranspruch - über 100 Sekunden dauern, bis man nach Zugabe des Anmachwassers unter starkem Rühren eine homogene Suspension erhält. Dies ist insbesondere bei der Verwendung von Mischpumpen problematisch.

Aufgabe der vorliegenden Erfindung war es demzufolge, pulverförmige Zusammensetzungen zur Verfügung zu stellen, die eine schnellere zeitlichen Entfaltung der dispergierenden Wirkung des Fließmittels nach Zugabe von Anmachwasser zeigen, als dies mit den bisher bekannten Zusammensetzungen möglich war.

Gelöst wurde diese Aufgabe durch eine pulverförmige Zusammensetzung, herstellbar durch in Kontakt bringen eines Pulvers mit 0,01 bis 50 Gew.-%, insbesondere 0,01 bis 25 Gew.-%, bevorzugt 0,5 bis 15 Gew.-%, insbesondere bevorzugt 0,5 bis 4 Gew.-%, bezogen auf die Gesamtmasse der Zusammensetzung, einer flüssigen Komponente, umfassend mindestens ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(II) mindestens ein ethylenisch ungesättigtes Monomer mit einem Polyalkylenoxid-Rest, wobei die flüssige Komponente mindestens 1 Gew.-%, bevorzugt zwischen 5 und 70 Gew.-%, insbesondere zwischen 25 und 60 Gew.-% des mindestens einen Copolymers und mindestens 30 Gew.-%, bevorzugt zwischen 98 und 30 Gew.-%, insbesondere zwischen 90 und 30 Gew.-% und besonders bevorzugt zwischen 75 und 40 Gew.-% eines organischen Lösungsmittels enthält und wobei das Pulver, welches mit der flüssigen Komponente in Kontakt gebracht wird, kein anorganisches Bindemittel umfasst.

Überraschend hat sich hierbei ergeben, dass nicht nur die gestellte Aufgabe in vollem Umfang gelöst werden konnte, sondern dass die pulverförmige Zusammensetzung neben der hervorragenden Dispergierbarkeit gleichzeitig ausgezeichnete Verarbeitungseigenschaften aufweist. Insbesondere konnte eine deutliche Reduzierung der Staubbildung bei der Handhabung der pulverförmige Zusammensetzung beobachtet werden.

Die erfindungsgemäße pulverförmige Zusammensetzung zeigt eine sehr schnelle zeitliche Entfaltung der dispergierenden Wirkung des Copolymers nach Zugabe von Anmachwasser, was beispielsweise für die Dispergierung von Pigmenten sehr vorteilhaft ist. Überraschend wurde aber auch gefunden, das die Dispergierung einer pulverförmigen Mischung, umfassend die erfindungsgemäße pulverförmige Zusammensetzung, zu einer deutlichen Beschleunigung der zeitlichen Entfaltung der dispergierenden Wirkung des Copolymers nach Zugabe von Anmachwasser führt, verglichen mit der Zugabe des Copolymers im Anmachwasser oder in Form eines Pulvers. Somit eignet sich die erfindungsgemäße pulverförmige Zusammensetzung insbesondere auch für anorganische Bindemittelzusammensetzung, wobei zunächst eine ausgewählte Komponente der Bindemittelzusammensetzung, beispielsweise ein Füllstoff, mit dem erfindungsgemäßen Copolymer in Kontakt gebracht wird und nachfolgend das anorganische Bindemittel und ggf. weitere Komponenten zugemischt werden.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (I) durch mindestens eine der folgenden allgemeinen Formeln aus der Gruppe (la), (Ib) und (Ic) repräsentiert:

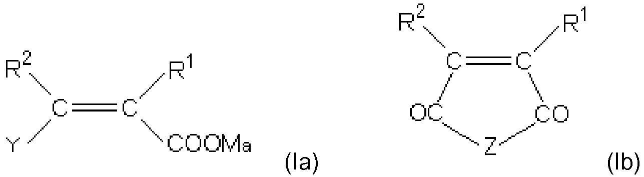

Bei dem Mono- oder Dicarbonsäure-Derivat (la) und dem in cyclischer Form vorliegenden Monomer (Ib), wobei Z = O (Säureanhydrid) oder NR² (Säureimid) darstellen, steht R¹ und R² unabhängig voneinander für Wasserstoff oder einen aliphatischen Kohlenwasserstoffrest mit 1 bis 20 C-Atomen, vorzugsweise eine Methylgruppe. Y bedeutet H, -COOMₐ, -CO-O(C_{q}H₂qO)ᵣ-R³, -CO-NH-(C_{q}H_{2q}O)ᵣ-R³.

M bedeutet Wasserstoff, ein ein- oder zweiwertiges Metallkation, vorzugsweise Natrium-, Kalium-, Calcium- oder Magnesium-Ion, weiterhin Ammonium oder ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R³ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl - oder Naphthylreste anzusehen, die insbesondere noch durch Hydroxyl-, Carboxyl- oder Sulfonsäuregruppen substituiert sein können.

Die folgende Formel stellt das Monomer (Ic) dar:

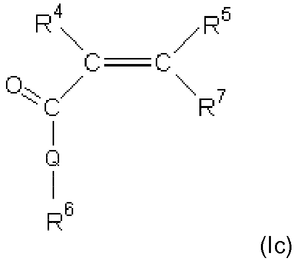

Hierbei steht R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen. Q kann gleich oder verschieden sein und wird durch NH, NR³ oder O repräsentiert, wobei R³ die oben genannte Bedeutung besitzt.

Weiterhin ist R⁶ gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3 repräsentiert.

R⁷ bedeutet H, -COOMₐ, -CO-O(C_{q}H_{2q}O)ᵣ-R³, -CO-NH-(C_{q}H₂qO)ᵣ-R³, wobei Mₐ, R³, q und r die oben genannte Bedeutungen besitzen.

R⁸ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin bevorzugt im Sinne der vorliegenden Erfindung wird das ethylenisch ungesättigte Monomer (II) durch folgende allgemeine Formeln repräsentiert: 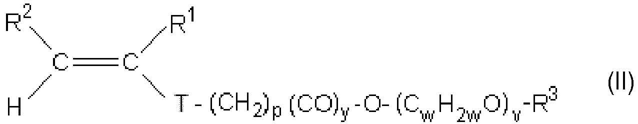 wobei p für eine ganze Zahl zwischen 0 und 6 steht, y für 0 oder 1, v für eine ganze Zahl zwischen 3 und 500 und w unabhängig voneinander für jede (C_{w}H_{2w}O)-Einheit gleich oder verschieden für eine ganze Zahl zwischen 2 und 18 sowie T für Sauerstoff oder eine chemische Bindung. R¹, R² und R³ besitzen die oben genannte Bedeutung.

In einer bevorzugten Ausführungsform stehen in der allgemeine Formeln (II) p für eine ganze Zahl zwischen 0 und 4, v für eine ganze Zahl zwischen 5 und 250 und w unabhängig voneinander für jede (C_{w}H_{2w}O)-Einheit gleich oder verschieden für 2 oder 3.

In einer besonders bevorzugten Ausführungsform stehen in der allgemeinen Formel (II) p für 4, v für eine ganze Zahl zwischen 10 und 120 und w unabhängig voneinander für jede (C_{w}H_{2w}O)-Einheit gleich oder verschieden für 2 oder 3, T für Sauerstoff und y für 0. Hierbei ist es besonders bevorzugt, wenn zumindest ein Teilbereich durch ein statistisches Ethylenoxid/Propylenoxid-Copolymer gebildet wird und der molare Anteil an Propylenoxid-Einheiten bevorzugt 10 bis 30 mol-%, bezogen auf die Summe der Ethylenoxid- und Propylenoxid-Einheiten des statistischen Ethylenoxid/Propylenoxid-Copolymers oder des entsprechenden Teilbereichs beträgt.

Insbesondere kann es sich bei dem mindestens einen ethylenisch ungesättigten Monomer mit einem Polyalkylenoxid-Rest (II) um eine Verbindung der Formel (III) handeln. Der Block A besteht aus einer Polyethylenoxid-Einheit, wobei n bevorzugt eine Zahl von 20 bis 30 repräsentiert. Der Block B besteht aus einer statistischen Ethylenoxid/Propylenoxid-Copolymer-Einheit, wobei k bevorzugt eine Zahl von 5 bis 10 und I bevorzugt eine Zahl von 20 bis 35 repräsentiert.

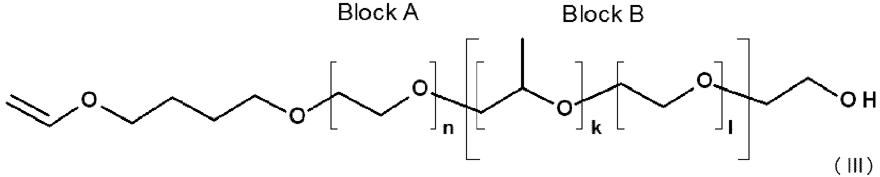

In einer weiterhin bevorzugten Ausführungsform der Erfindung handelt es sich bei dem ethylenisch ungesättigte Monomer (II) um mindestens eine Verbindung der allgemeinen Formeln (IV), (V), (VI) und (VII), wobei 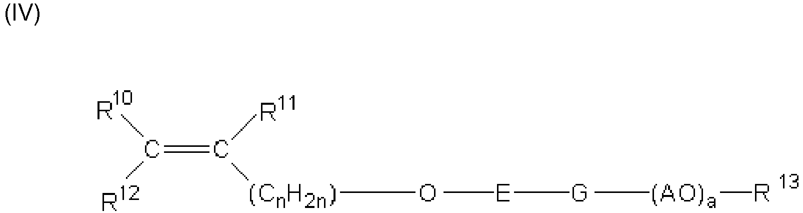 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, insbesondere C₁, C₂, C₃, C₄, C₅ oder C₆ zwar jeweils typisch, jedoch bevorzugt C₂ und C₄, eine Cyclohexylgruppe, CH₂-C₆H₁₀, ortho, meta oder para substituiert vorliegendes C₆H₄ und/oder eine nicht vorhandene Einheit, d.h., dass E nicht vorhanden ist;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt, d.h., dass G nicht vorhanden ist;
A gleich oder verschieden sowie repräsentiert durch CₓH₂ₓ mit x = 2, 3, 4 und/oder 5 bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
R¹³ gleich oder verschieden sowie repräsentiert durch H, eine unverzweigte oder verzweigte C₁ - C₄ Alkylgruppe, CO-NH₂, und/oder COCH₃, bevorzugt H, CH₃; 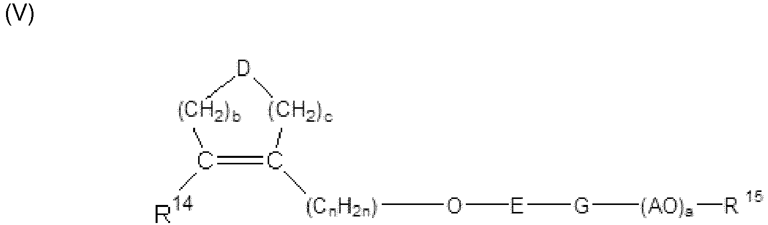 mit
R¹⁴ gleich oder verschieden sowie repräsentiert durch H und/oder eine unverzweigte oder verzweigte C₁ - C₄ Alkylgruppe, bevorzugt H;
E gleich oder verschieden sowie repräsentiert durch eine unverzweigte oder verzweigte C₁ - C₆ Alkylengruppe, bevorzugt C₂H₄, eine Cyclohexylgruppe, CH₂-C₆H₁₀, ortho, meta oder para substituiert vorliegendes C₆H₄ und/oder durch eine nichtvorhandene Einheit, d.h. E ist nicht vorhanden;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit, d.h. G ist nicht vorhanden, vorliegt;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
D gleich oder verschieden sowie repräsentiert durch eine nicht vorhandene Einheit, d.h. D ist nicht vorhanden, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃, bevorzugt H; 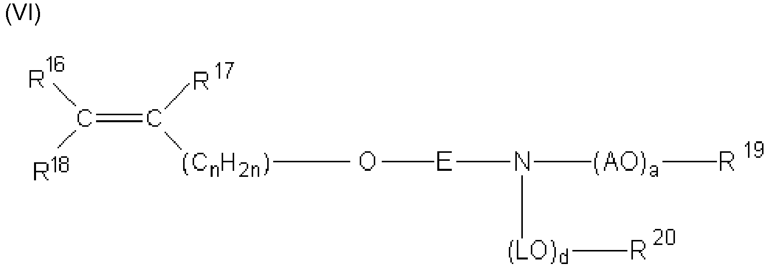 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, bevorzugt C₂H₄ oder C₄H₈, eine Cyclohexylgruppe, CH₂-C₆H₁₀, ortho, meta oder para substituiert vorliegendes C₆H₄ und/oder durch eine nicht vorhandene Einheit, d.h. E ist nicht vorhanden;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5, bevorzugt x = 2 und/oder CH₂-CH(C₆-H₅);
a gleich oder verschieden sowie repräsentiert durch eine ganze Zahl von 2 bis 350, bevorzugt 10 - 200;
d gleich oder verschieden sowie repräsentiert durch eine ganze Zahl von 1 bis 350, bevorzugt 10 - 200;
R¹⁹ gleich oder verschieden sowie repräsentiert durch H und/oder eine unverzweigte oder verzweigte C₁ - C₄ Alkylgruppe, bevorzugt H,
R²⁰ gleich oder verschieden sowie repräsentiert durch H und/oder eine unverzweigte C₁ - C₄ Alkylgruppe, bevorzugt H. 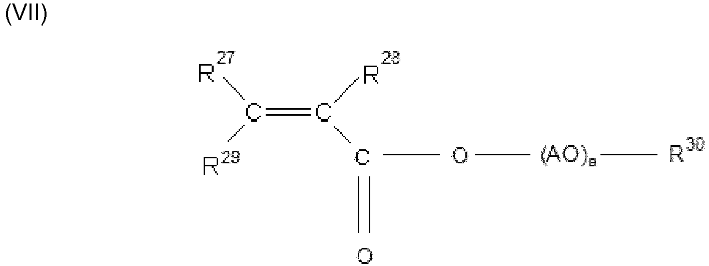 worin
R²⁷, R²⁸ und R²⁹ gleich oder verschieden sind und unabhängig voneinander für H stehen und/oder einen unverzweigten oder verzweigten C₁ - C₄ verzweigten Alkylgruppenrest stehen;
A sind gleich oder verschieden und bedeuten CₓH₂ₓ mit x = 2, 3, 4 und/oder 5 und/oder CH₂CH(C₆H₅);
a sind gleich oder verschieden und stehen für eine ganze Zahl zwischen 2 und 350;
R³⁰ sind gleich oder verschieden und stehen für H und/oder einen unverzweigten oder verzweigten C₁ -C₄ Alkylrest.

Allgemein kann gesagt werden, dass die Poly-Alkoxyseitenketten (AO)ₐ der Polyethermakromonomere besonders bevorzugt reine Poly-Ethoxyseitenketten sind, wobei jedoch weiterhin bevorzugt auch gemischte Poly-Alkoxyseitenketten, insbesondere solche, die sowohl Propoxy- als auch Ethoxy-Gruppen enthalten, vorliegen können.

In der Praxis wird häufig als Polyethermakromonomer alkoxyliertes Isoprenol, also alkoxyliertes 3-Methyl-3-buten-1-ol und/oder alkoxylierter Hydroxybutylvinylether und/oder alkoxylierter (Meth)allylalkohol, wobei Allylalkohol bevorzugt gegenüber Methallylalkohol ist, mit normalerweise jeweils einer arithmetisch mittleren Zahl an Oxyalkylengruppen von 4 bis 350 eingesetzt. Besonders bevorzugt ist alkoxylierter Hydroxybutylvinylether.

Neben dem Monomeren (I) und (II) können noch weitere Monomertypen in dem erfindungsgemäßen Copolymer zum Einsatz kommen. In einer besonders bevorzugten Ausführungsform umfasst das erfindungsgemäße Copolymer jedoch als Monomere kein Styrol oder Derivate des Styrols.

Der molare Anteil der Monomere (I) und (II) in dem erfindungsgemäßen Copolymer kann in weiten Bereichen frei gewählt werden. Als besonders vorteilhaft hat es sich erwiesen, wenn der Anteil des Monomeren (I) an dem Copolymer 5 bis 95 Mol-%, bevorzugt 30 bis 95 Mol-% und insbesondere 55 bis 95 Mol-% beträgt. In einer weiterhin bevorzugten Ausführungsform beträgt der Anteil des Monomeren (II) an dem Copolymer 1 bis 89 Mol-%, insbesondere 1 bis 55 Mol-% und besonders bevorzugt 1 bis 30 Mol-%.

Es ist hierbei als bevorzugt anzusehen, dass das Monomer (II) ein Molekulargewicht von 500 bis 10.000 g/mol aufweist.

In einer weiterhin bevorzugten Ausführungsform besitzt das erfindungsgemäße Copolymer ein Molekulargewicht von 12.000 bis 75.000 g/mol, bestimmt durch Gelpermeationschromatographie gegen Polyethylenglykol Standards.

Als organisches Lösungsmittel können bevorzugt alle organischen Lösungsmittel dienen, in welchen das erfindungsgemäße Copolymer eine gute Löslichkeit aufweist. Insbesondere bevorzugt sollte sich mindestens 1 Gew.-%, bevorzugt mindestens 25 Gew.-% und insbesondere mindestens 40 Gew.-% des Copolymers in dem organischen Lösungsmittel lösen, bezogen auf die Gesamtmasse von Lösungsmittel und Copolymer. Die Löslichkeit des Copolymers ist von den konkret gewählten Monomeren und den Mengenverhältnissen der eingesetzten Monomere abhängig und kann durch einfache Versuche ermittelt werden. Insbesondere handelt es sich um mindestens ein Lösungsmittel aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole. Weiterhin kann es sich um Polyethylenglykolether oder Polypropylenglykolether oder statistische Ethylenoxid/Propylenoxid-Copolymere mit einer mittleren Molmasse von 200 bis 2000 g/mol, Mono-, Di- oder Triethylenglykol, Mono-, Di - oder Tripropylenglykol, Methy-, Ethyi-Propyi-, Butyl- oder höherwertige Alkylpolyalkylenglykolether mit 1, 2, 3 oder mehreren Ethylenglykol- und/oder Propylenglykoleinheiten, beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20000 g/mol, Pentaerythritolalkoxylate, Ethylencarbonat, Propylencarbonat, Glycerincarbonat, Glycerinformal und 2,3-O-Isopropylidenglycerin. Insbesondere bevorzugt handelt es sich um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse von 200 bis 2000 g/mol. Weiterhin bevorzugt sind Lösungsmittel auf Basis von Carbonaten, insbesondere Ethylencarbonat, Propylencarbonat und Glycerincarbonat.

Die erfindungsgemäße flüssige Komponente kann auch Wasser enthalten. Ein hoher Wassergehalt der flüssigen Komponente kann, in Abhängigkeit von den Inhaltsstoffen der pulverförmigen Zusammensetzung und insbesondere bei einem nachfolgenden Zumischen von anorganischen Bindemitteln, zu einer Verschlechterung der Lagerfähigkeit der pulverförmigen Zusammensetzung führen. Besonders bevorzugt beträgt der Wassergehalt deshalb < 10 Gew.-%, insbesondere < 2,5 Gew.-%. Insbesondere kann der Wassergehalt zwischen 30 und 0,01 Gew.-%, vorzugsweise zwischen 10 und 0,01 Gew.-% und besonders bevorzugt zwischen 2 und 0,1 Gew.-% der flüssigen Komponente betragen. So kann insbesondere der Einsatz von Wasserfängern vorteilhaft sein. Wasserfänger binden dabei Wasser entweder in ihre Kristrallstruktur ein oder verbrauchen das Wasser über andere Mechanismen, bevor das Bindemittel damit reagieren kann und einen negative Beeinträchtigung der Produkteigenschaft verursacht wird. Insbesondere kann es sich um Molekularsieb oder schnell wasserbindende Salze, wie beispielsweise CaO handeln. Wasserfänger können zu einer höheren Wassertoleranz der erfindungsgemäßen pulverförmigen Zusammensetzung führen, insbesondere bei einem nachfolgenden Zumischen von anorganischen Bindemitteln, wobei in diesem Fall keine Verschlechterung der Lagerfähigkeit der erfindungsgemäßen pulverförmigen Zusammensetzung zu beobachten ist.

Hinsichtlich der Löslichkeit des erfindungsgemäßen Copolymers in der flüssigen Komponente hat es sich als besonders vorteilhaft erwiesen, wenn das Monomer (I) oder (II) ein statistisches Ethylenoxid/Propylenoxid-Copolymer mit einem Molekulargewicht von 160 bis 10000 g/mol umfasst, insbesondere von 500 bis 6000 g/mol, wobei der molare Anteil an Propylenoxid-Einheiten bevorzugt 10 bis 30%, bezogen auf die Summe der Ethylenoxid- und Propylenoxid-Einheiten beträgt. Insbesondere bevorzugt handelt es sich in diesem Fall bei dem organischen Lösungsmittel um Alkylpolyalkylenglykolether und besonders bevorzugt Methylpolyethylenglykolether sowie Polyethylenglykolether, Polypropylenglykolether und statistische Ethylenoxid/Propylenoxid-Copolymere mit einer mittleren Molmasse zwischen 200 und 2000 g/mol.

Um eine möglichst gute Beschleunigung der zeitlichen Entfaltung der dispergierenden Wirkung des Copolymers nach Zugabe von Anmachwasser zu erreichen ist es vorteilhaft, wenn das mindestens eine erfindungsgemäße Copolymer in der flüssigen Komponente zu einem Anteil von mindestens 50 Gew.-%, bevorzugt mindestens 80 Gew.-% und besonders bevorzugt mindestens 99 Gew.-% in gelöster Form vorliegt. Insbesondere liegt das Copolymer in der flüssigen Komponente gelöst vor.

Das in Kontakt bringen des Pulvers mit der flüssigen Komponente, enthaltend das erfindungsgemäße Copolymer, kann auf jede dem Fachmann hierfür bekannte Art geschehen. Als besonders geeignet hat es sich erwiesen, wenn die flüssige Komponente durch Aufsprühen oder Bedüsen mit dem Pulver in Kontakt gebracht wird, wobei das Verfahren bevorzugt einen Mischschritt umfasst. Auf diese Weise kann der homogene Auftrag in einfacher Weise bei gleichzeitig guter Haftung und Anfangsadhäsion gewährleistet werden. Selbstverständlich kann das in Kontakt bringen des Pulvers mit der flüssigen Komponente auch auf jede andere geeignete Art und Weise erfolgen. In Frage kommen hier insbesondere auch das Abmischen bzw. Unterrühren, wobei jedoch der Sprühauftrag eindeutig zu bevorzugen ist, da dies die einfachste und wirtschaftlich attraktivste Auftragungsvariante darstellt.

In einer besonders bevorzugten Ausführungsform können der flüssigen Komponente, je nach Verwendungszweck, auch noch weitere Additive zugemischt werden, wobei diese bevorzugt in gelöster Form vorliegen. Insbesondere kann die flüssige Komponente bezogen auf die Gesamtmischung 0,5 bis 69 Gew.-% mindestens eines weiteren Additivs enthalten. Hierdurch kann die pulverförmige Zusammensetzung in einfacher Weise mit weiteren Additiven versetzt werden, was eine besonders wirtschaftliche Vorgehensweise darstellt und ggf. kann auch ein gesonderter Trocknungsschritt entfallen. Durch die besonders homogene Verteilung des weiteren Additivs kann dessen Effekt direkt nach dem Anmachen mit Wasser verbessert werden, was als weiterer Vorteil dieser Ausführungsform zu sehen ist.

In einer weiterhin bevorzugten Ausführungsform besteht die flüssige Komponente aus einer Lösung des erfindungsgemäßen Copolymers in einem organischen Lösungsmittel.

Die pulverförmige Zusammensetzung sollte im Rahmen der vorliegenden Erfindung vorzugsweise in trockener Form vorliegen, wobei hierunter zu verstehen ist, dass diese einen Wassergehalt nach Karl-Fischer von weniger als 10 Gew.-%, vorzugsweise weniger als 5 Gew.-% und besonders bevorzugt von weniger als 2 Gew.-% aufweist.

Es ist bevorzugt, wenn das Pulver, welches mit der flüssigen Komponente in Kontakt gebracht wird, eine mittlere Teilchengröße zwischen 0,1 und 1000 µm, besonders bevorzugt zwischen 1 und 200 µm aufweist. Die Teilchengröße wird hierbei durch Laserdiffraktometrie bestimmt.

In einer besonders bevorzugten Ausführungsform umfasst die erfindungsgemäße pulverförmige Zusammensetzung mindestens eine Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit. Insbesondere kann das Pulver, welches mit der flüssigen Komponente in Kontakt gebracht wird, zu mindestens 50 Gew.-%, insbesondere zu mindestens 90 Gew.-% und besonders bevorzugt zu mindestens 98 Gew.-% aus mindestens einer Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit bestehen. Insbesondere kann es sich also bei dem Pulver, welches mit der flüssigen Komponente in Kontakt gebracht wird, um eine für eine anorganische Bindemittelzusammensetzung als Füllstoff geeignete Verbindung handeln.

Ein weiterer Gegenstand der vorliegenden Erfindung ist eine Bindemittelzusammensetzung umfassend eine erfindungsgemäße pulverförmige Zusammensetzung und ein anorganisches Bindemittel.

Bevorzugt handelt es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat und latent hydraulisches bzw. puzzolanisches Bindemittel.

Bei der Bindemittelzusammensetzung, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

Bei dem erfindungsgemäßen Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) handeln.

In einer besonderen Ausführungsform kann es sich bei dem erfindungsgemäßen Werktrockenmörtel auch um eine selbstnivellierende Verlaufsmasse handeln. Dies ist besonders vorteilhaft, da solche pulverförmigen Zusammensetzungen für geringe Schichtdicken in der Regel sehr fein sind und sich daher vergleichsweise langsam mit Wasser anmischen lassen.

Ebenso eingeschlossen sind Werkmörtel, welche bei der Herstellung auf der Baustelle außer mit Wasser auch noch mit weiteren Komponenten, insbesondere flüssigen und/oder pulverförmigen Additiven und/oder mit Gesteinskörnung versehen werden können (Zweikomponenten Systeme).

Ein weiterer Gegenstand der vorliegenden Erfindung ist ein Verfahren zur Herstellung einer erfindungsgemäßen Bindemittelzusammensetzung, wobei eine erfindungsgemäße pulverförmige Zusammensetzung mit einem anorganischen Bindemittel und optional weiteren Additiven gemischt wird.

Bei der erfindungsgemäßen Bindemittelzusammensetzung, welche mindestens ein anorganisches Bindemittel aufweist, kann es sich bei dem Bindemittel insbesondere auch um ein Bindemittelgemisch handeln. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement und die verschiedenen wasserhaltigen und wasserfreien Calciumsulfate verstanden. Diese können dann ggf. noch weitere Additive enthalten.

In einer bevorzugten Ausführungsform umfasst die erfindungsgemäße pulverförmige Zusammensetzung mindestens ein organisches und/oder anorganisches Pigment, welches insbesondere für die Herstellung von Lacken, Farben und Kunstoffen sowie Druckertinten geeignet ist. Bevorzugt handelt es sich bei dem erfindungsgemäßen Pulver um ein anorganisches Pigment. Die erfindungsgemäße pulverförmige Zusammensetzung kann hierbei bevorzugt mindestens eine Verbindung aus der Reihe Titandioxide, Zinksulfide, Zinkoxide, Eisenoxide, Magnetite, Manganeisenoxide, Chromoxide, Ultramarin, Nickelantimontitanoxide, Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente umfassen. Insbesondere kann die erfindungsgemäße pulverförmige Zusammensetzung die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 umfassen. Bevorzugt sind auch Mischungen anorganischer Pigmente. Mischungen von organischen mit anorganischen Pigmenten können ebenfalls eingesetzt werden. Die hierauf basierenden erfindungsgemäßen Zusammensetzungen eignen sich zur Herstellung von Pigmentdipsersionen, welche als Abtönpasten, Pigmentslurries, -dispersionen oder -präparationen in der Farben und Lackindustrie, in der Keramikindustrie und u. a. in der Textil- und Lederindustrie einsetzt werden können.

Insbesondere lassen sich auch erfindungsgemäße Zusammensetzungen auf Basis von transparenten Eisenoxidpigmenten herstellen, mit denen transparente wässrige oder lösemittelhaltige Lacke für die Holzbeschichtung erzeugt werden können.

In einer besonderen Ausführungsform wird die erfindungsgemäße pulverförmige Zusammensetzung in wässrigen Dispersionsfarben eingesetzt. Die erfindungsgemäße pulverförmige Zusammensetzung basiert in diesem Fall bevorzugt auf einem Pulver auf Basis von Weißpigment, insbesondere Titandioxid, Bariumsulfat und Zinksulfit und/oder Buntpigment, insbesondere Eisenoxidpigmente, Chromdioxid und Cobaltspinellpigmente und/oder natürlichen oder gefällten Calciumcarbonat, Talkum, Kaolin, Quarzmehl und andere Mineralpigmenten. Insbesondere kann das Pulver, welches mit der flüssigen Komponente in Kontakt gebracht wird, zu mindestens 50 Gew.-%, insbesondere zu mindestens 90 Gew.-% und besonders bevorzugt zu mindestens 98 Gew.-% aus mindestens einem organischen und/oder anorganischen Pigment bestehen.

Ein weiterer Gegenstand der vorliegenden Erfindung ist ein Verfahren zur Herstellung einer flüssigen Komponente, umfassend mindestens 30 Gew.-% eines organischen Lösungsmittels, maximal 30 Gew.-% Wasser, insbesondere weniger als 10 Gew.-% und besonders bevorzugt weniger als 2,5 Gew.-% Wasser, sowie ein Copolymer, erhalten durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(II) mindestens ein ethylenisch ungesättigtes Monomer mit
   einem Polyalkylenether-Rest,
   wobei die Polymerisation der Monomeren in einem wasserhaltigen Lösungsmittel durchgeführt wird, wobei der Wassergehalt der gesamten Reaktionsmischung mehr als 10 Gew.-%, insbesondere mehr als 20 Gew.-% und besonders bevorzugt mehr als 40 Gew.-% beträgt, das Polymerisationsprodukt mit einem organischen Lösungsmittel versetzt und Wasser entfernt wird.

Die Entfernung des Wassers kann mit allen dem Fachmann hierfür bekannten Verfahren durchgeführt werden. Insbesondere haben sich Dünnschichtverdampfer als besonders geeignet erwiesen.

Insbesondere bevorzugt handelt es sich bei dem Monomer (I) um die bereits oben angeführten Verbindungen der Formel (la), (Ib)und (Ic) und bei dem Monomer (II) um die bereits oben angeführte Verbindung der Formel (II).

Als Lösungsmittel bei der Herstellung der erfindungsgemäßen Copolymere ist insbesondere Wasser geeignet. Es besteht aber auch die Möglichkeit ein Gemisch aus Wasser und einem organischen Lösungsmittel einzusetzen, wobei sich das Lösungsmittel bezüglich radikalischer Polymerisationsreaktionen weitestgehend inert verhalten sollte. Hinsichtlich der organischen Lösungsmittel sind insbesondere die bereits oben genannten organischen Lösungsmittel als besonders geeignet zu betrachten.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder chemische Polymerisationsinitiatoren wie organische Peroxide, z. B. Benzoylperoxid, tert.-Butylhydroperoxid, Methylethylketonperoxid, Cumoylperoxid, Dilauroylperoxid oder Azoinitiatoren, wie z. B. Azodiisobutyronitril, Azobisamidopropyl-hydrochlorid und 2,2'-Azobis(2-methylbutyronitril) verwendet werden. Ebenfalls geeignet sind anorganische Peroxyverbindungen, wie z. B. Ammoniumperoxodisulfat, Kaliumperoxodisulfat oder Wasserstoffperoxid, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten. Insbesondere bevorzugt handelt es sich um eine Mischung aus mindestens einer Sulfinsäure mit mindestens einem Eisen(III)-Salz und/oder um eine Mischung aus Ascorbinsäure mit mindestens einem Eisen(III)-Salz.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

In einer alternativen weiteren Ausführungsform kann das Verfahren zur Herstellung der erfindungsgemäßen Copolymere auch in einem organischen Lösungsmittel oder in einem Gemisch mehrerer organischer Lösungsmittel durchgeführt werden. Insbesondere sind hierzu wiederum die bereits weiter oben genannten organischen Lösungsmittel als besonders geeignet zu betrachten.

Ein weiterer Gegenstand der vorliegenden Erfindung ist die Verwendung einer flüssigen Komponente, umfassend mindestens 30 Gew.-% , bevorzugt zwischen 98 und 30 Gew.-%, insbesondere zwischen 90 und 30 Gew.-% und besonders bevorzugt zwischen 75 und 40 Gew.-% eines organischen Lösungsmittels und mindestens 1 Gew.-%, bevorzugt zwischen 5 und 70 Gew.-%, insbesondere zwischen 25 und 60 Gew.-% mindestens eines Copolymers, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(II) mindestens ein ethylenisch ungesättigtes Monomer mit
   einem Polyalkylenether-Rest,
   zur Behandlung eines Pulvers, welches kein anorganisches Bindemittel umfasst, zur Beschleunigung der zeitlichen Entfaltung der dispergierenden Wirkung des Copolymers nach Zugabe von Anmachwasser, wobei 0,01 bis 50 Gew.-%, insbesondere 0,01 bis 25 Gew.-%, bevorzugt 0,5 bis 15 Gew.-%, insbesondere bevorzugt 0,5 bis 4 Gew.-%, der flüssigen Komponente, bezogen auf die Gesamtmasse des behandelten Pulvers, eingesetzt werden und wobei das behandelte Pulver vor der Zugabe des Anmachwassers ggf. mit einem anorganischen Bindemittel gemischt wird.

Insbesondere bevorzugt handelt es sich bei dem Monomer (I) wiederum um die bereits oben angeführten Verbindungen der Formel (la), (Ib)und (Ic) und bei dem Monomer (II) um die bereits oben angeführte Verbindung der Formel (II).

Die nachfolgenden Beispiele sollen die Erfindung näher erläutern.

### Beispiele

### Gelpermeationschromatographie

Die Probenpräparation für die Molgewichtsbestimmung erfolgte durch Lösen von Copolymerlösung im GPC Eluent, so dass die Polymerkonzentration im GPC-Eluent 0,5 Gew.-% beträgt. Danach wurde diese Lösung über einen Spritzenvorsatzfilter mit Polyethersulfonmembran und Porengröße 0.45 µm filtriert. Das Injektionsvolumen dieses Filtrats betrug 50 - 100 µl.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).
- Säulen:: Shodex SB-G Guard Column for SB-800 HQ series Shodex OHpak SB 804HQ and 802.5HQ (PHM gel, 8 x 300 mm, pH 4,0 bis 7,5)
- Eluent:: 0,05 M wässrige Ammoniumformiat / Methanol-Mischung = 80:20 (Volumenteile)
- Flußrate:: 0,5 ml/min
- Temperatur:: 50° C
- Injektion:: 50 bis 100 µl
- Detektion:: RI und UV

Die Molekulargewichte der Copolymere wurden relativ zu Polyethylenglykol Standards der Firma PSS Polymer Standards Service GmbH bestimmt. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

### Zusammensetzung der Copolymere

Die Synthese der verwendeten Copolymere ist zum Beispiel in WO2006133933 Seite 12, Zeile 5 bis Seite 13, Zeile 26 beschrieben. Die verwendeten Copolymere haben folgende Zusammensetzung:

**Tabelle 1**

| Polymer | Mol Acrylsäure | Mol Makromonomer | Makromonomer | Mw (g/mol) | Feststoff % |
|---|---|---|---|---|---|
| A | 5 | 1 | VOBPEG-3000 | 32.000 | 51 |
| B | 10 | 1 | VOBPEG-3000 | 25.000 | 51 |
| C | 5 | 1 | VOBPEPG-3000 | 27.000 | 51 |
| D | 10 | 1 | VOBPEPG-3000 | 21.000 | 51 |

Die Abkürzung VOBPEG-3000 steht für Vinyl-oxy-butyl-polyethylenglykol mit einer molaren Masse von 3000 g/mol, d.h. gemäß Formel (III) k=0, I=0 und n-68.

Die Abkürzung VOBPEPG-3000 steht für blockartig aufgebautes Vinyl-oxy-butylpolyethylen/propylen-glykol. Block A enthält lediglich Polyethylenglykol, Block B eine statistische Mischung aus Ethylenglykol und Propylenglykol. Die molare Masse beträgt 3000 g/mol. Die Struktur entspricht Formel (III) mit n-23, k∼13, I∼28.

### Herstellbeispiele

### Allgemeines Herstellbeispiel (Copolymer in Methylpolyethylenglykol 500)

In einen 2000 ml Rundkolben wird eine 51 %igen wässrigen Lösung des Copolymers vorgelegt. Methylpolyethylenglykol 500 (Pluriol® A 500 E der BASF SE) wird zugegeben. Mittels eines Rotationsverdampfers wird dann bei 70 °C und 40 mbar das Wasser abgezogen. Bei einem Wassergehalt von unter 1 Gew.-% wird abgebrochen und abgekühlt. Die entstandene Lösung ist leicht opalisierend und hat einen Wirkstoffgehalt von 50 Gew.-%.

**Tabelle 2**

| Beispiel | Copolymer | Copolymer (wässrige Lösungen) | Methylpolyethylenglykol 500 | Wirkstoffgehalt [%] |
|---|---|---|---|---|
| 1 | A | 980 g, 51%ige Lösung | 500 g | 50 |
| 2 | C | 980 g, 51%ige Lösung | 500 g | 50 |
| 3 | D | 980 g, 51%ige Lösung | 500 g | 50 |

### Allgemeines Herstellbeispiel (flüssige Komponente auf Kalksteinmehl)

In einem Grindomix GM 200 (Retsch GmbH) wird Kalksteinmehl (Omyacarb 20 BG von Omya GmbH) eingefüllt. Anschließend wird die flüssige Komponente mit einer Pipette hinzugefügt. Es wird für 5 Minuten bei 5.000 Umdrehungen/Minute homogenisiert. Dabei fällt ein leicht rieselfähiges mit der flüssigen Komponente beschichtetes Kalksteinmehl an.

**Tabelle 3**

| Beispiel | flüssige Komponente | Kalksteinmehl |
|---|---|---|
| 4 (erfindungsgemäß) | 20 g (50%ige Lösung) aus Beispiel 2 | 180 g |
| 5 (erfindungsgemäß) | 20 g (50%ige Lösung) aus Beispiel 3 | 180 g |
| 6 (Vergleich) | 25 g (40%ige wässrige Lösung) Copolymer A | 190 g |

### Anwendungsbeispiele

285 g selbstverlaufende Spachtelmasse (siehe Tabelle 4 und Tabelle 5) und 285 g Zementmörtel (siehe Tabelle 4 und Tabelle 6) werden mit jeweils 0,25 Gew.-% Copolymer, bezogen auf die Gesamtmasse, versetzt. Dabei wird das Copolymer für die Vergleichsbeispiele V1 und V2 als sprühgetrocknetes Polymerpulver eingewogen. Für das Vergleichsbeispiel V3 wird ein mit Copolymer beschichtetes Kalksteinmehl aus Beispiel 6 zur selbstverlaufenden Spachtelmasse gegeben (Copolymer wird als wässrige Lösung auf das Kalksteinmehl aufgebracht). Für das Vergleichsbeispiel V4 wird die selbstverlaufende Spachtelmasse vorab mit einer 40%igen Lösung des Copolymers behandelt und anschließend zusammen mit dem Kalksteinmehl homogenisiert. Diese Mischung wird nach einem Tag Lagerung dem Anwendungstest unterzogen, d.h. die Entfaltung der dispergierenden Wirkung des Copolymers nach Zugabe von Anmachwasser geprüft. Für die Anwendungsbeispiele A1 und A2 wurden mit Copolymer und Methylpolyethylenglykol 500 beschichtete Kalksteinmehle (jeweils 15 g aus den Beispielen 2 bzw. 3) mit der pulverförmigen Zusammensetzung vermischt. Zur Begutachtung der Entfaltung der dispergierenden Wirkung der Copolymere nach Zugabe von Anmachwasser werden 300 g der so beaufschlagten pulverförmigen Zusammensetzung in einen Becher gegeben und mit einem Axialrührer bei 500 Umdrehungen pro Minute gerührt. Dann erfolgt die Zugabe von Anmachwasser und es wird die Zeit gemessen, nach der visuell eine homogene Konsistenz des Frischmörtels resultiert.

**Bindemittelzusammensetzung (Selbstverlaufende Spachtelmasse und Zementmörtel) Tabelle 4**

| | Hersteller | Selbstverlaufende Spachtelmasse [Gewichtsteile] | Zementmörtel [Gewichtsteile] |
|---|---|---|---|
| Portlandzement (Milke CEM I 52,5N) | Heidelberg Cement AG | 30,00 | 46,00 |
| Calciumaluminatzement (Fondu Ciment) | Kerneos Inc | 10,00 | |
| Calciumsulfatbinder CAB 30 | Lanxess AG | 6,00 | |
| Calciumcarbonat (Omyacarb 6AL) | Omya GmbH | 10,00 | 10,00 |
| Calciumcarbonat (Omyacarb 15AL) | Omya GmbH | 15,00 | 15,00 |
| Calciumcarbonat (Omyacarb 130AL) | Omya GmbH | 26,38 | 26,6 |
| Lithiumcarbonat | Chemmetall GmbH | 0,10 | 0,10 |
| Entschäumer (Vinapor DF 9010 F) | BASF Construction Polymers GmbH | 0,15 | 0,15 |
| Dispersionspulver (Vinnapas 5023L) | Wacker AG | 2,00 | 2,00 |
| Weinsäure | DU Chemie GmbH | 0,12 | |

Die Daten in Tabelle 5 und 6 zeigen, dass die pulverförmigen Zusammensetzungen, welche mit Copolymer beschichtetes Kalksteinmehl enthalten (A1-A4) eine deutlich schnellere Entfaltung der dispergierenden Wirkung der Copolymere nach Zugabe von Anmachwasser gewährleisten als bei Zugabe des pulverförmigen Copolymere zusammen mit dem Anmachwasser (V1, V2, V5, V6) oder Zugabe eines mit einer wässrigen Lösung eines Copolymers beschichteten Kalksteinmehls (V3) oder bei Vormischung der wässrigen Polymerlösung mit der selbstverlaufende Spachtelmasse vor Zugabe des Anmachwassers (V4).

**Tabelle 5**

| | V1 | V2 | V3 | V4 | A1 | A2 |
|---|---|---|---|---|---|---|
| | [g] | [g] | [g] | [g] | [g] | [g] |
| Selbstverlaufende Spachtelmasse (siehe Tabelle 4) | 285 | 285 | 285 | 285 | 285 | 285 |
| Copolymer A (sprühgetrocknetes Polymerpulver) | 0,75 | | | | | |
| Copolymer B (sprühgetrocknetes Polymerpulver) | | 0,75 | | | | |
| Beispiel 4 | | | | | 15 | |
| Beispiel 5 | | | | | | 15 |
| Beispiel 6 | | | 15 | | | |
| Copolymer A (40%ige wässrige Lösung) | | | | 1,88 | | |
| Methylpolyethylenglykol 500 im Anmachwasser | 0,75 | 0,75 | | | | |
| Omyacarb 20 BG | 13,5 | 13,5 | | 13,5 | | |
| Anmachwasser | 57 | 57 | 57 | 55,87 | 57 | 57 |
| Zeit bis Mischung homogen in Sekunden | 10 | 10 | 10 | 12 | 6 | 5 |

**Tabelle 6**

| | V5 | V6 | A3 | A4 |
|---|---|---|---|---|
| | [g] | [g] | [g] | [g] |
| Zementmörtel (siehe Tabelle 4) | 285 | 285 | 285 | 285 |
| Copolymer A (sprühgetrocknetes Polymerpulver) | 0,75 | | | |
| Copolymer B (sprühgetrocknetes Polymerpulver) | | 0,75 | | |
| Beispiel 4 | | | 15 | |
| Beispiel 5 | | | | 15 |
| Methylpolyethylenglykol 500 im Anmachwasser | 0,75 | 0,75 | | |
| Omyacarb 20 BG | 13,5 | 13,5 | | |
| Anmachwasser | 57 | 57 | 57 | 57 |
| Zeit bis Mischung homogen in Sekunden | 13 | 11 | 5 | 4 |

## Patentansprüche

1. Pulverförmige Zusammensetzung, herstellbar durch in Kontakt bringen eines Pulvers mit
0,01 bis 50 Gew.-%, bezogen auf die Gesamtmasse der Zusammensetzung, einer flüssigen Komponente, umfassend mindestens ein Copolymer, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit
einem Polyalkylenoxid-Rest,
wobei die flüssige Komponente mindestens 1 Gew.-% des mindestens einen Copolymers und mindestens 30 Gew.-% eines organischen Lösungsmittels enthält und wobei das Pulver, welches mit der flüssigen Komponente in Kontakt gebracht wird, kein anorganisches Bindemittel umfasst.

2. Pulverförmige Zusammensetzung nach Anspruch 1, **dadurch gekennzeichnet, dass** die pulverförmige Zusammensetzung mindestens eine Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit umfasst.

3. Pulverförmige Zusammensetzung nach Anspruch 1, **dadurch gekennzeichnet, dass** die pulverförmige Zusammensetzung mindestens ein organisches Pigment und/oder anorganisches Pigment umfasst.

4. Pulverförmige Zusammensetzung nach einem der Ansprüche 1 bis 3, **dadurch gekennzeichnet, dass** das ethylenisch ungesättigte Monomer (I) durch mindestens eine der folgenden allgemeinen Formeln aus der Gruppe (la), (Ib) und (Ic) repräsentiert wird 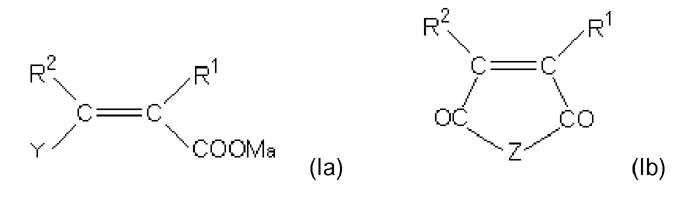 wobei
R¹ und R² unabhängig voneinander für Wasserstoff oder einen aliphatischen Kohlenwasserstoffrest mit 1 bis 20 C-Atomen
Y für H, -COOMₐ, -CO-O(C_{q}H_{2q}O)ᵣ-R³, -CO-NH-(C_{q}H_{2q}O)ᵣ-R³
M für Wasserstoff, ein ein- oder zweiwertiges Metallkation, Ammoniumion oder einen organischen Aminrest
a für ½ oder 1
R³ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR³
stehen, 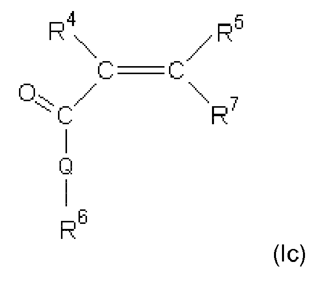 mit
R⁴ und R⁵ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
Q gleich oder verschieden sowie repräsentiert durch NH, NR³ oder O; wobei R³ die oben genannte Bedeutung besitzt
R⁶ gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR⁸_{b} mit n = 0, 1, 2, 3 oder 4 und b = 2 oder 3
R⁷ für H, -COOMₐ, -CO-O(C_{q}H_{2q}O)ᵣ-R³, -CO-NH-(C_{q}H_{2q}O)ᵣ-R³, wobei Mₐ, R³, q und r oben genannte Bedeutungen besitzen
R⁸ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

5. Pulverförmige Zusammensetzung nach einem der Ansprüche 1 bis 4, **dadurch gekennzeichnet, dass** das ethylenisch ungesättigte Monomer (II) durch folgende allgemeine Formeln repräsentiert wird 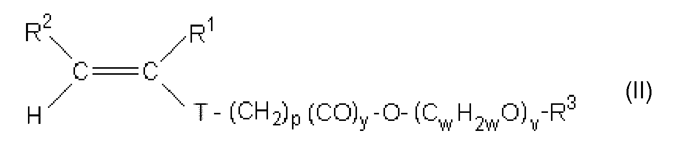 worin
p für eine ganze Zahl zwischen 0 und 6
y für 0 oder 1
v für eine ganze Zahl zwischen 3 und 500
w unabhängig voneinander für jede (C_{w}H_{2w}O)-Einheit gleich oder verschieden für eine ganze Zahl zwischen 2 und 18,
T für Sauerstoff oder eine chemische Bindung,
wobei R¹, R² und R³ die oben genannte Bedeutung besitzen stehen.

6. Pulverförmige Zusammensetzung nach einem der Ansprüche 1 bis 5, **dadurch gekennzeichnet, dass** der Anteil des Monomeren (I) an dem Copolymer 5 bis 95 Mol-% beträgt.

7. Pulverförmige Zusammensetzung nach einem der Ansprüche 1 bis 6, **dadurch gekennzeichnet, dass** der Anteil des Monomeren (II) an dem Copolymer 1 bis 89 Mol-% beträgt.

8. Pulverförmige Zusammensetzung nach einem der Ansprüche 1 bis 7, **dadurch gekennzeichnet, dass** es sich bei dem organischen Lösungsmittel um mindestens eines aus der Reihe Ethylacetat, n-Butylacetat, 1-Methoxy-2-propylacetat, Ethanol, i-Propanol, n-Butanol, 2-Ethylhexanol, 1-Methoxy-2-propanol, Ethylenglykol, Propylenglykol, Aceton, Butanon, Pentanon, Hexanon, Methylethylketon, Ethylacetat, Butylacetat, Amylacetat, Tetrahydrofuran, Diethylether, Toluol, Xylol oder höher siedende Alkylbenzole, Polyethylenglykolether oder Polypropylenglykolether oder statistische Ethylenoxid/Propylenoxid-Copolymere mit einer mittleren Molmasse von 200 bis 2.000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- und/oder Propylenglykoleinheiten, Glycerinethoxylate mit einem Molekulargewicht von 200 bis 20.000 g/mol, Pentaerythritolalkoxylate, Ethylencarbonat, Propylencarbonat, Glycerincarbonat, Glycerinformal und 2,3-O-Isopropylidenglycerin handelt.

9. Pulverförmige Zusammensetzung nach einem der Ansprüche 1 bis 8, **dadurch gekennzeichnet, dass** das mindestens eine erfindungsgemäße Copolymer in der flüssigen Komponente zu einem Anteil von mindestens 50 Gew.-% in gelöster Form vorliegt.

10. Pulverförmige Zusammensetzung nach einem der Ansprüche 1 bis 9, **dadurch gekennzeichnet, dass** das Monomer (I) oder (II)
ein statistisches Ethylenoxid/Propylenoxid-Copolymer mit einem Molekulargewicht von 160 bis 10.000 g/mol umfasst.

11. Bindemittelzusammensetzung umfassend eine pulverförmige Zusammensetzung nach einem der Ansprüche 1 bis 10 und ein anorganisches Bindemittel.

12. Bindemittelzusammensetzung nach Anspruch 11, **dadurch gekennzeichnet, dass** es sich bei der Bindemittelzusammensetzung um einen Werktrockenmörtel handelt, insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel.

13. Bindemittelzusammensetzung nach Anspruch 11 oder 12, **dadurch gekennzeichnet, dass** es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat und latent hydraulisches bzw. puzzolanisches Bindemittel handelt.

14. Verfahren zur Herstellung einer Bindemittelzusammensetzung nach einem der Ansprüche 11 bis 13, wobei eine pulverförmige Zusammensetzung nach einem der Ansprüche 1 bis 10 mit einem anorganischen Bindemittel und optional weiteren Additiven gemischt wird.

15. Verwendung einer flüssigen Komponente, umfassend mindestens 30 Gew.-% eines organischen Lösungsmittels und mindestens 1 Gew.-% eines Copolymers, welches erhältlich ist durch Polymerisation einer Mischung von Monomeren, umfassend
(I) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(II) mindestens ein ethylenisch ungesättigtes Monomer mit
einem Polyalkylenether-Rest,
zur Behandlung eines Pulvers, welches kein anorganisches Bindemittel umfasst, zur Beschleunigung der zeitlichen Entfaltung der dispergierenden Wirkung des Copolymers nach Zugabe von Anmachwasser, wobei 0,01 bis 50 Gew.-% der flüssigen Komponente, bezogen auf die Gesamtmasse des behandelten Pulvers, eingesetzt werden und wobei das behandelte Pulver vor der Zugabe des Anmachwassers gegebenenfalls mit einem anorganischen Bindemittel gemischt wird.
